# EUROPEAN PATENT SPECIFICATION

(11) **EP 2 105 745 B1**
(45) Date of publication and mention of the grant of the patent: **26.10.2011**
(21) Application number: 09004023.9
(22) Date of filing: 20.03.2009
(51) Int. Cl.: G01P 3/44, G01P 3/486, B66F 9/075, F16C 13/00, G01D 5/32, G01P 13/04

(54) **Measurement device**
Messvorichtung
Dispositif de mesure

(30) Priority: 27.03.2008 SE 0800680
(43) Date of publication of application: 30.09.2009
(73) Proprietor: Caldaro AB, 104 25 Stockholm (SE)
(72) Inventor: Aase, Stefan, 16839 Bromma (SE); Wallin, Peter, 394 77 Kalmar (SE); Hellgren, Pär, 386 96 Färjestaden (SE)
(74) Representative: Wallengren, Yngvar

(56) References cited:
- DE-A1- 3 724 636
- DE-U1-202004 007 346
- GB-A- 1 504 792
- US-A1- 2003 173 844
- US-A1- 2004 120 620

## Description

A measurement device for relative movement measurement between a rotary wheel and a stator comprising: a rotary cable wheel (1), which is in rotation-driving cooperation with a cable, a sealed ball bearing (5) for journaling the cable wheel, a stator (2) which supports the ball bearing and the cable wheel and a sensor device (22, 24) for determining the relative rotational movement between the cable wheel and the stator.

### BACKGROUND ART

Measurement devices of the above-outlined type are previously known in the art in numerous variations, and are used, for example, for measuring the vertical position of the forks of a fork-lift truck. Such fork-lift trucks may have a lifting height of several metres if they are used in a high stack store. If, for example, the fork-lift truck has a lifting height of the order of magnitude of between 15 and 18 metres, the truck driver, from his position on the truck, cannot determine the exact vertical position of the lifting forks when they are located a distance from the driver's seat. This entails requirements for an accurate measurement device to enable the truck driver to reliably place a load in or take out a load from a high stack store.

EP 1 359 423 discloses a measurement device which is usable in the above-outlined practical contexts. The measurement device according to this publication has a cable wheel with an internal seat, in which the outer ring or race of a ball bearing is accommodated. The inner ring or race of the ball bearing rests on a tubular mounting stub shaft which also serves for securing an electronic unit which, for the greater part, is cast in plastic and which includes sensors that register the relative rotation between the cable wheel and the electronic unit.

The design and construction according to the above-mentioned document might certainly operate well in certain situations, but encounters major problems as regards maintenance and cleaning.

US2004/0120620 discloses in the fig 4 embodiment a measuring device very smiliar to that of EP 1 359 423. This measuring device has a cable wheel with a seat for the outer ring of a ball bearing. The inner ring is arranged on a hollow stub shaft which is fastened to a plastic holder also having, axially outside the ball bearing, one part of a sensor device. An other part of the sensor device is provided on a carrier fastened to the outer ring and extending axially therefrom. The only protection against the ingress of dirt and moist is a labyrinth sealing arranged on the cable wheel and the plastic holder.

DE 0S 37 24 636 discloses a hoisting crane having a beam to which are welded two seat rings for ball bearings which support opposite ends of a hub of a cable wheel. There is no measuring sensor shown in this document.

GB 1 504 792 refers to a ball bearing having arranged therein a sensor device. The outer and inner rings have laterally extended portions between which the sensor device is provided. No cable wheel is disclosed in this document.

US 2003/0173 844 describes a ball bearing having, on its outer and inner rings; laterally extended portions between which an electric generator is provided. The generator provides electricity to an internal combustion engine, e g for controlling the operation thereof.

### PROBLEM STRUCTURE

The present invention has for its object to design the measurement device intimated by way of introduction such that the problems and drawbacks inherent in the prior art technology are obviated. In particular, the present invention has for its object to design the measurement device such that electronics and measurement sensors are safety protected from dust, moisture and water. The present invention further has for its object to design the measurement device such that it may readily be dismounted for servicing and cleaning if this were to prove necessary. Finally, the present invention has for its object to design the measurement device such that it may be manufactured at low cost and provide extremely reliable measurement signals.

### SOLUTION

The objects forming the basis of the present invention will be attained if the measurement device intimated by way of introduction is given the characteristics defined in claim 1.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is an exploded view in perspective of the subject matter of the present invention, seen in a direction from its stator towards its cable wheel;
- Fig. 2: is an exploded view of the present invention, seen in a direction from its cable wheel towards its stator; and
- Fig. 3: is a vertical section through the subject matter of the present invention in the assembled state.

### DESCRIPTION OF PREFERRED EMBODIMENT

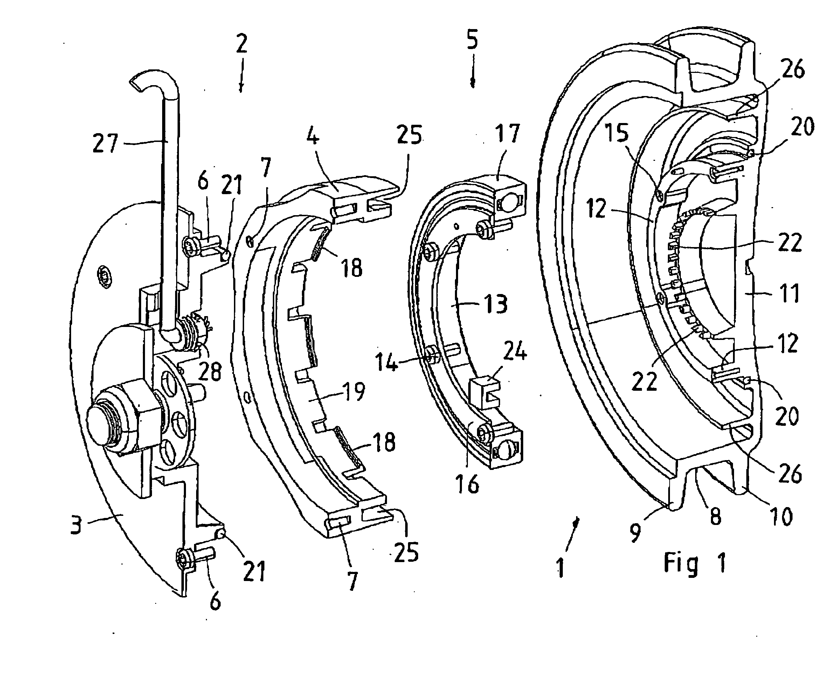

Referring to the Drawings, it will be apparent from Fig. 1 that the device according to the present invention includes a cable wheel 1, a stator 2, which is composed of a fixing member 3 for mounting the device according to the present invention, and a retainer member 4 for retaining a ball bearing 5. The fixing member 3 and the retainer member 4 are, in the assembled state of the device according to the present invention, interconnected to one another by the intermediary of a number of screws 6 which fit in corresponding apertures 7 in the retainer member 4. By means of these screws, an axial clamping force may be realised between the fixing member 3 and the retainer member 4, which will be described in greater detail hereinbelow.

It will be apparent from the Drawing that the cable wheel 1 has a cylindrical running path 8 which, in the axial direction, is defined by flanges 9 and 10. The running path 8 is intended to be wrapped 360° by the cable in relation to which the measurement device according to the present invention moves.

The cable wheel 1 has an end plate 11 from which axially extends a tubular seat 12 with a cylindrical outside. The seat 12 is dimensioned in such a manner that the inner ring or race 13 of the ball bearing 5 may rest without play on the seat. The ball bearing 5 is kept in position on the seat in the axial direction by the intermediary of a number of screws 14 which are accommodated in corresponding apertures 15 in the end edge of the seat. The screws 14 extend through a clamping ring 16 which rests against the inner ring or race 13 of the ball bearing 5 on that side of the ball bearing facing away from the cable wheel 1. Hereby, the inner ring 13 of the ball bearing may be urged in an axial direction towards the end plate 11 of the cable wheel 1.

The stator 2 and in particular its retainer member 4 has a number of retainer means for cooperation with the outer ring or race 17 of the ball bearing 5. The retainer means are formed as snap catches 18 which are slightly resilient and which, in the axial direction, may be pressed on the outer ring 17.

Counting in the circumferential direction, there are disposed guide surfaces 19 between the snap catches 18, the guide surfaces being parts of cylindrical surfaces which are disposed to guide without play against the outer ring 17 of the ball bearing 5.

About the seat 12 of the cable wheel 1, there is disposed a groove with a sealing ring 20, preferably an O ring, which, on mounting of the ball bearing 5, comes into abutment against the inner ring 13 of the ball bearing. On tightening of the screws 14 which extend through the clamping ring 16, this sealing ring 20 is compressed slightly so that a satisfactory seal is obtained against the inner ring 13 of the ball bearing.

On mounting of the retainer member 4 on the outer ring 17 of the ball bearing, the snap catches 18 will, as was intimated above, grasp about the outer ring 17 of the ball bearing in order to snap back onto that side of the outer ring facing towards the cable wheel 1. Analogous with the cable wheel 1, the fixing member 3 of the stator 2 also displays a sealing ring 21 which is disposed to come into abutment against the outer ring 17 of the ball bearing. On tightening of the screws 6, this sealing ring 21 is thus axially pressed against the outer ring 17 so that a satisfactory seal is realised against it. In this context, it might also be mentioned that the ball bearing 5 is of the sealed type, so that no communication through the space between the outer ring and the inner ring can exist, either for water, steam or dust.

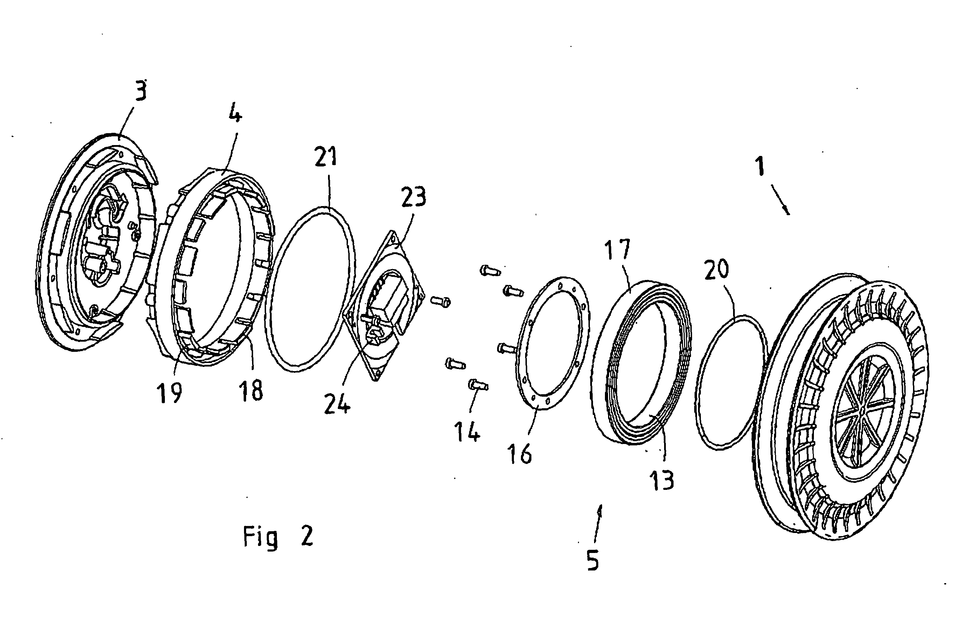

It will be apparent from the foregoing that, after mounting of the device according to the present invention and tightening of the screws 6 and 14, the area interiorly in the seat 12 will be a closed area completely sealed off from the ambient surroundings. This closed area also extends axially slightly outside the seat, right up to the inside of the fixing member 3 of the stator 2. Interiorly in this sealed-off area, and radially inside the seat 12, there is disposed, on the inside of the cable wheel 1, in particular on its end plate 11, a crown of measurement teeth 22, this crown of measurement teeth being included as a part of the sensor device that is employed to register the relative rotation between the cable wheel 1 and the stator 2. This sensor further includes (Fig. 2) a circuit card 23 with electronic components and a measurement fork 24 which, in the assembled state of the device according to the present invention, straddles the crown of measurement teeth 22. The measurement fork is provided with sensors for registering the number of passing measurement teeth, and also their direction of passage. Preferably, these sensors are of the optical type and at least two mutually phase-shifted sensors are employed.

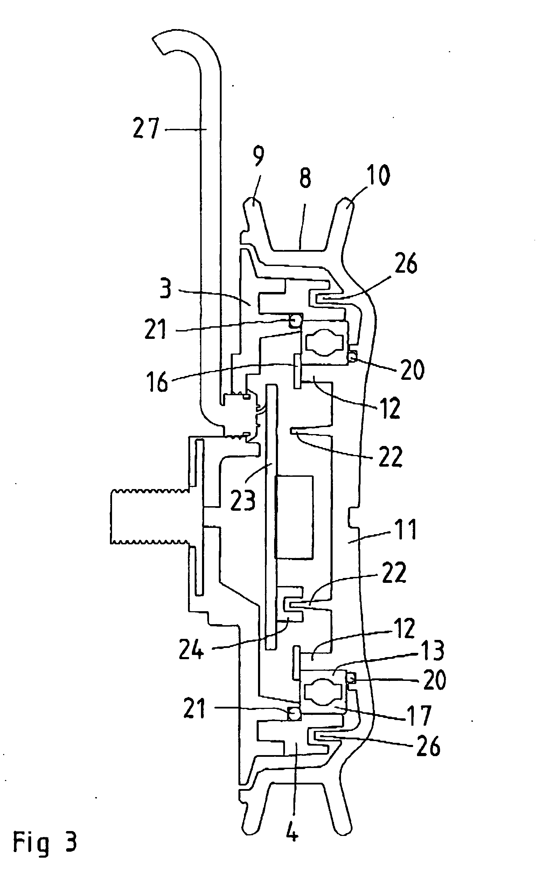

It will be clearly apparent from Fig. 3 that the space interiorly in the seat 12 of the cable wheel 1, and interiorly in the fixing member 3 of the stator 2 is closed and sealed off from the ambient surroundings by means of the two sealing rings 20 and 21, but also by means of the integrated seal in the ball bearing 5 between the outer ring 17 and the inner ring 13.

In order further to improve the exclusion of dirt and water, there is disposed, radially outside and around the ball bearing 5, a labyrinth seal which includes a circumferential groove 25 disposed in the retainer member 4 and in which extends a circumferential annular projection 26 on the side of the cable wheel facing towards the stator. The groove 25 has a cuneiform cross section and is narrower at its bottom than at its discharge end. Correspondingly, the projection 26 is also cuneiform in cross section and has a considerably lesser radial extent at its free end than at the transitional region between the projection and the end plate 11 of the cable wheel 1. Hereby, it will be ensured that, if the device according to the present invention were to be employed outdoors and be exposed to wet weather, any possible rainwater that might have penetrated into the labyrinth seal will drain off naturally via the labyrinth seal. Thus, no remaining stagnant water need be feared.

In order to emit the measurement signals generated by the sensor device from the closed space interiorly in the device according to the present invention, there is provided a conductor 27 which extends though an aperture in the fixing member 3 and where sealing rings 28 are also provided.

## Claims

1. A measurement device for relative movement measurement between a rotary wheel and a stator comprising: a rotary cable wheel (1), which is in rotation-driving cooperation with a cable, a sealed ball bearing (5) for journaling the cable wheel, a stator (2) which supports the ball bearing and the cable wheel and a sensor device (22, 24) for determining the relative rotational movement between the cable wheel and the stator **characterised in that** the cable wheel has a tubular seat (12) with an interior space and an outer cylindrical surface on which the inner ring (13) of the ball bearing (5) rests, that the stator (2) has retainer means (18, 19) for cooperation wit the outer ring (17) of the ball bearing, the sensor device being provided in the interior space, said interior space being sealed by means of an inner sealing ring (20) provided between the inner ring (13) and the cable wheel (1) and an outer sealing ring (21) provided between the outer ring (17) and the stator (2).

2. The measurement device as claimed in Claim 1, **characterised in that** the stator includes a fixing member (3) and a retainer member (4) secured thereon for the ball bearing (5), the retainer means (18, 19) being disposed on the retainer member and designed for snap catch fixing on the outer ring (17) of the ball bearing.

3. The measurement device as claimed in Claims 1 or 2, **characterised in that** the inner ring (1.3) of the ball bearing (5) is in the axial direction, urged against the sealing ring (20), and the inner ring is adapted to be fixed on the seat by means of a clamping ring (16) connected to the seat by means of screw unions (14, 15).

4. The measurement device as claimed in any of Claims 1-3, **characterised in that** the sealing ring (21), in cooperation with the outer ring (17) of the ball bearing (5) is disposed on the fixing member (3) of the stator (2), and that the fixing member and the retainer member (4) are adapted to be axially compressed by means of screw unions (6, 7).

5. The measurement device as claimed in any of Claims 1 to 4, **characterised in that** a labyrinth seal (25, 26) is disposed between the stator (2) and the cable wheel (1) and radially outside the ball bearing (5).

6. The measurement device as claimed in any of Claims 1 to 5, **characterised in that**, on the cable wheel (1) and in the interior space, there is disposed a crown of measurement teeth (22), and that there is fixedly connected to the stator (2) a measurement fork (24) whose shanks straddle the crown, optical sensors on the measurement fork being provided to register the passage of the measurement teeth included in the crown.

7. The measurement device as claimed in Claim 6, **characterised in that** the measurement fork (24) has at least two sensors that are phase-shifted in relation to one another.

## Patentansprüche

1. Messvorrichtung für die Messung der relativen Bewegung zwischen einem drehenden Rad und einem Stator, mit:
einem drehenden Seilrad (1) im die Drehung antreibenden Zusammenwirken mit einem Seil, einem abgedichteten Kugellager (5) zum Tragen des Seilrades, einem Stator (2), der das Kugellagers und das Seilrad hält, und einer Sensorvorrichtung (22, 24) zum Bestimmen der relativen Drehbewegung zwischen dem Seilrad und dem Stator, **dadurch gekennzeichnet, dass** das Seilrad einen rohrförmigen Sitz (12) mit einem Innenraum und einer äußeren zylindrischen Fläche, auf welcher der Innenring (1.3) des Kugellagers (5) ruht, besitzt, dass der Stator (2) Festhalteeinrichtungen (18, 19) für das Zusammenwirken mit dem Außenring (17) des Kugellagers besitzt, wobei die Sensorvorrichtung im Innenraum bereitgestellt wird, wobei der Inneraum mittels eines inneren Dichtrings (20), der zwischen dem Innenring (13) und dem Seilrad (1) bereitgestellt wird, und eines äußeren Dichtrings (21), der zwischen dem Außenring (17) und dem Stator (2) bereitgestellt wird, abgedichtet wird.

2. Messvorrichtung gemäß Anspruch 1, **dadurch gekennzeichnet, dass** der Stator ein Fixierelement (3) und ein daran befestigtes Festhaltelement (4) für das Kugellager (5) besitzt, wobei die Festhalteeinrichtungen (18, 19) auf dem Festhalteelement angeordnet und für die Einschnappfixierung auf dem Außenring (17) des Kugellagers ausgelegt sind.

3. Messvorrichtung gemäß Anspruch 1 oder 2, **dadurch gekennzeichnet, dass** der Innenring (13) des Kugellagers (5) in axialer Richtung gegen den Dichtring (20) gedrückt wird und der Innenring angepasst ist, mittels eines Klemmrings (16), der mittels Verschraubungen (14, 15) mit dem Sitz verbunden ist, auf dem Sitz fixiert zu werden.

4. Messvorrichtung gemäß einem der Ansprüche 1 bis 3, **dadurch gekennzeichnet, dass** der Dichtring (21) im Zusammenwirken mit dem Außenring (17) des Kugellagers (5) auf dem Fixierelement (3) des Stators (2) angeordnet ist und dass das Fixierelement und das Festhalteelement (4) angepasst sind, mittels Verschraubungen (6, 7) axial zusammengedrückt zu werden.

5. Messvorrichtung gemäß einem der Ansprüche 1 bis 4, **dadurch gekennzeichnet, dass** eine Labyrinthdichtung (25, 26) zwischen dem Stator (2) und dem Seilrad (1) und radial außerhalb des Kugellagers (5) angeordnet ist.

6. Messvorrichtung gemäß einem der Ansprüche 1 bis 5, **dadurch gekennzeichnet, dass** auf dem Seilrad (1) und im Innenraum ein Kranz aus Messzähnen (22) ungeordnet ist und dass eine Messgabel (24), deren Zinken den Kranz umgreifen, mit dem Stator (2) fest verbunden ist, wobei auf der Messgabel optische Sensoren bereitgestellt werden, um den Durchhang der im Kranz enthaltenen Messzähne zu erfassen.

7. Messvorrichtung gemäß Anspruch 6, **dadurch gekennzeichnet, dass** die Messgabel (24) mindestens zwei Sensoren besitzt, die zueinander phasenversetzt sind.

## Revendications

1. Dispositif de mesure destiné à assurer la mesure d'un mouvement relatif entre une roue tournante et und stator comprenant; une roue de câble tournante (1), qui coopère avec un câble afin d'assurer son entraînement en rotation, un roulement à billes étanche (5) assurant le montagne en palier de la roue de câble, un stator (2) qui supporte le roulement à billes et la roue de câble et un dispositif formant capteur (22, 24) destiné à déterminer le mouvement de rotation relatif entre la roue de câble et le stator **caractérisé en ce que** la roue de câble comporte un siège tubulaire (12) avec un espace intérieur et une surface cylindrique externe sur laquelle la bague interne (13) du roulement à billes (5) repose, **en ce que** le stator (2) comporte des moyens de retenue (18, 19) destinés à coopérer avec la bague externe (17) du roulement à bille, le dispositif formant capteur étant agencé dans l'espace intérieur, ledit espace intérieur étant scellé au moyen d'une bague d'étanchéité interne (20) agencée entre la bague interne (13) et la roue de câble (1) et une bague d'étanchéité externe (21) agencée entre la bague externe (17) et le stator (2).

2. Dispositif de mesure selon la revendication 1, **caractérisé en ce que** le stator comporte un élément de fixation (3) et un élément de retenue (4) fixé sur celui-ci pour le roulement à billes (5), les moyens de retenue (18, 19) étant disposés sur l'élément de retenue et conçus pour se fixer par encliquetage sur la bague externe (17) du roulement à billes.

3. Dispositif de mesure selon les revendications 1 ou 2, **caractérisé en ce que** la bague interne (13) du roulement à billes (5), est, dans la direction axiale, appliquée contre la bague d'étanchéité (20), et la bague interne est adaptée de manière à être fixée sur le siège au moyen d'une bague de blocage (16) couplée au siège au moyen de liaisons à vis (14, 15).

4. Dispositif de mesure selon l'une quelconque des revendications 1 à 3, **caractérisé en ce que** la bague d'étanchéité (21), en coopération avec la bague externe (17) du roulement à billes (5) est disposée sur l'élément de fixation (3) du stator (2), et **en ce que** l'élément de fixation et l'élément de retenue (4) sont adaptés de manière à être compressés axialement au moyen de liaisons à vis (6, 7).

5. Dispositif de mesure selon l'une quelconque des revendications 1 à 4, **caractérisé en ce qu'**un joint labyrinthe (25, 26) est disposé entre le stator (2) et la roue de câble (1) et radialement à l'extérieur du roulement à billets (5).

6. Dispositif de mesure selon l'une quelconque des revendications 1 à 5, **caractérisé en ce qu'**il est disposé, sur la roue de câble (1) et dans l'espace intérieur, une couronne de dents de mesure (22), et **en ce qu'**il est fixé à demeure sur le stator (2) un étrier de mesure (24) dont les bras enfourchent la couronne, des capteurs optiques sur l'étrier de mesure étant agencés de manière à correspondre au passage des dents de mesure formées sur la couronne.

7. Dispositif de mesure selon la revendication 6, **caractérisé en ce que** la fourchette de mesure (24) comporte au moins deux capteurs qui sont déphasés l'un par rapport à l'autre.
